# EUROPEAN PATENT APPLICATION

(11) **EP 2 613 584 A1**
(43) Date of publication of application: **10.07.2013**
(21) Application number: 11821045.9
(22) Date of filing: 23.06.2011
(51) Int. Cl.: H04W 28/18, H04W 28/26

(54) **METHOD AND SYSTEM FOR CHANNEL RESERVATION**

(30) Priority: 31.08.2010 CN 201010273910
(71) Applicant: ZTE Corporation, Shenzhen, Guangdong 518057 (CN)
(72) Inventor: LI, Nan, Guangdong 518057 (CN); SUN, Bo, Guangdong 518057 (CN); LV, Kaiying, Guangdong 518057 (CN); LI, Feng, Guangdong 518057 (CN); JIANG, Jing, Guangdong 518057 (CN)
(74) Representative: Chimini, Francesco
(86) International application number: PCT/CN2011/076188
(87) International publication number: WO 2012/028019

(57) **Abstract**

The present invention provides a method and a system for channel reservation. The method comprises: a sending station sending a channel reservation request message to a receiving station on a first number of fundamental channels, wherein the first number is an integer greater than or equal to 1, and each one of the fundamental channels is a minimum-bandwidth channel defined in a system in which the sending station and the receiving station locate; the receiving station sending a channel reservation acknowledgement message to the sending station on a second number of fundamental channels, wherein the second number is an integer greater than or equal to 1; and the sending station receiving the channel reservation acknowledgement message, and completing channel reservation with the receiving station. With the present invention, interference caused by other sending stations can be avoided.

## Description

### Technical Field

The present invention relates to the field of communications, in particular to a method and a system for channel reservation.

### Background

At present, in a field of a wireless network, a Wireless Local Area Network (WLAN) develops rapidly, and the need for coverage of the WLAN is increasingly growing. In an Institute of Electrical and Electronics Engineers (IEEE) industry specification IEEE802.11 group, a series of WLAN technologies with the most common standards, such as IEEE802.11a, IEEE802.11b, IEEE802.11g and the like, are defined successively. Subsequently, other task groups appear one after one and are engaged in developing specifications involving the improvement of the existing IEEE802.11 technology, for example, an IEEE802.11n task group proposes requirements on High Throughput (HT) to support data rate as high as 600Mbps, an IEEE802.11ac task group further proposes a concept of Very High Throughput (VHT), devices for 11ac work at 5GHz, and the data rate will reach 1Gbps. Furthermore, new protocols need to be backward compatible with previous protocols.

In the IEEE802.11, one Access Point (AP) and a plurality of Stations (STAs) associated with the AP form a Basic Service Set (BSS), or a plurality of STAs form one Independent BSS (IBSS). The IEEE802.11 defines two operating modes: a Distributed Coordination Function (DCF) and a Point Coordination Function (PCF), and improvement for the two operating modes: an Enhanced Distributed Channel Access (EDCA) and a Hybrid Coordination function controlled Channel Access (HCCA).

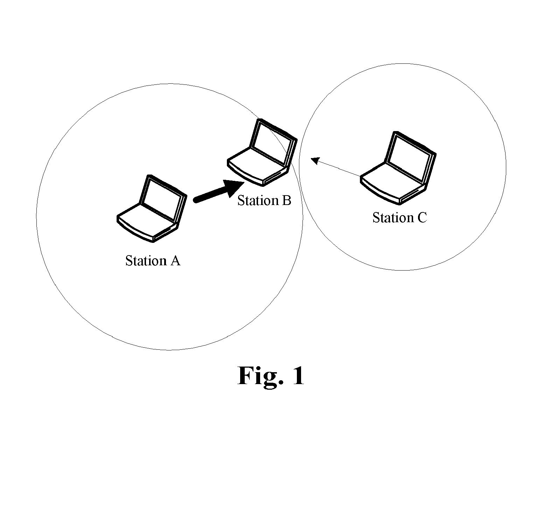

When a plurality of wireless STAs share a channel, it becomes quite difficult to detect conflict in the wireless environment, one big problem is a hidden node. Fig. 1 is a schematic diagram of a hidden node according to the related technologies. As shown in Fig. 1, station A sends data to station B, simultaneously, station C also sends data to station B, as both station C and station A locate beyond a coverage range of the opposite party, simultaneous sending by station A and station C will cause collision. In the view of station A, station C is one hidden node.

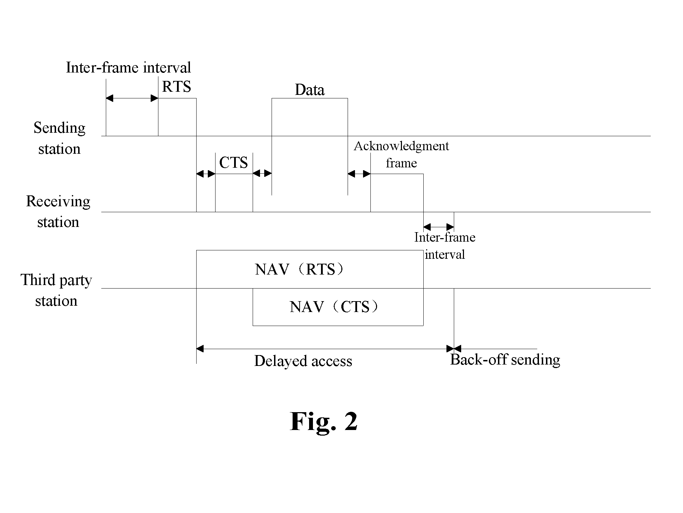

In order to solve the problem of hidden nodes, the IEEE802.11 proposed a mechanism for channel reservation. Fig. 2 is a schematic diagram of a method for channel reservation according to the related technologies. As shown in Fig. 2, a sending station sends a Request To Send (RTS) frame used for channel reservation, wherein the RTS frame (abbreviated as RTS hereinafter) comprises one time domain indicating a time duration required by a sending station to complete frame exchange. A receiving station replies with a Clear To Send (CTS) frame used for channel reservation acknowledgement, wherein the CTS frame (abbreviated as CTS hereinafter) comprises one time domain to ensure that the sending station can complete the frame exchange. One Network Allocation Vector (NAV) is set by third party stations capable of receiving the RTS/CTS, wherein the value of the NAV is set as a larger one of the two time domains, and the third party stations will not send data within the time so as to prevent hidden nodes from competing channels to cause conflict. After the NAV is reduced to zero, the third party stations can contend to send data. It should be noted that, after the receiving station receives the RTS, if the NAV set by the receiving station is not zero, it is indicated that the receiving station cannot send data currently, in this case, the receiving station will not reply with the CTS, and the sending station will regard that the reservation is failed if receiving no CTS, and will restart a back-off process.

Traditionally, the RTS/CTS mechanism is mainly applied to a 20MHz channel bandwidth. With the evolution of the IEEE802.11 protocol, the 20MHz channel bandwidth has been gradually extended to 40MHz, 80MHz, 120MHz and 160MHz formed by two non-contiguous 80MHz or two contiguous 80MHz bandwidths. These wide bandwidths are formed by binding a plurality of fundamental channels taking 20MHz as the minimum channel bandwidth, wherein one of 20MHz channels is called a primary channel, and other 20MHz channels are called secondary channels. In the conventional art, when channelizing a spectrum in a 5GHz frequency band, the corresponding configuration is as follows: a wide bandwidth is formed by non-overlapping 20MHz channels, according to the channelization method in the conventional art, 160MHz channel is formed by two adjacent or non-adjacent 80MHz channels, each 80MHz channel is formed by two adjacent 40MHz channels, and each 40MHz channel is formed by two adjacent 20MHz channels. If the BSS is 40MHz in bandwidth, the primary channel and the secondary channel are two adjacent 20MHz channels within one 40MHz; if the BSS is 80MHz in bandwidth, the primary channel and the secondary channel are two adjacent 20MHz channels within one 40MHz, this 40MHz is a 40MHz containing the primary channel, so it is also called a primary 40MHz, the other two secondary channels are also two adjacent 20MHz channels within one 40MHz, and this 40MHz is called secondary 40MHz, the rest can be deduced by analogy. The STA obtains a primary channel ID of the current AP by scanning a message sent by the AP. In a wide bandwidth environment, a plurality of BSSs working on different channel bandwidths will exist within a same segment of spectrum, these BSSs may be Overlap BSS (OBSS), and as a result, potential interference may be formed on channels.

Therefore, during a process of using a plurality of channels for data transmission between the sending station and the receiving station, as the used channels may be occupied by other sending stations, interference may be caused to data transmission between the sending station and the receiving station.

### Summary

The present invention provides a method and a system for channel reservation, which solve the problem that, during a process of using a plurality of channels for data transmission between a sending station and a receiving station, as the used channels may be occupied by other sending stations, interference may be caused to the data transmission between the sending station and the receiving station.

According to one aspect of the present invention, a method for channel reservation is provided.

According to the present invention, the method for channel reservation comprises: a sending station sending a channel reservation request message to a receiving station on a first number of fundamental channels, wherein the first number is an integer greater than or equal to 1, and each one of the fundamental channels is a minimum-bandwidth channel defined in a system in which the sending station and the receiving station locate; the receiving station sending a channel reservation acknowledgement message to the sending station on a second number of fundamental channels, wherein the second number is an integer greater than or equal to 1; and the sending station receiving the channel reservation acknowledgement message, and completing channel reservation with the receiving station.

Preferably, channel reservation request messages sent by the sending station on each one of the first number of fundamental channels are identical; and channel reservation acknowledgement messages sent by the receiving station on each one of the second number of fundamental channels are identical.

Preferably, the first number of fundamental channels comprise a primary channel of the sending station; and the second number of fundamental channels comprise a primary channel of the receiving station.

Preferably, the second number is smaller than or equal to the first number.

Preferably, before the sending station sends the channel reservation request message to the receiving station on the first number of fundamental channels, the method further comprises: the sending station pre-negotiating with the receiving station about the number of fundamental channels used for operation, wherein the number is smaller than or equal to a smaller one of the number of fundamental channels that can be supported by the sending station maximally and the number of fundamental channels that can be supported by the receiving station maximally.

Preferably, the first number is smaller than or equal to the pre-negotiated number of fundamental channels used for data transmission, and the second number is smaller than or equal to the pre-negotiated number of fundamental channels used for data transmission.

Preferably, the sending station comprises one of the following: an access point, a station of a basic service set, and a station of an independent service set; and the receiving station comprises one of the following: an access point, a station of a basic service set, and a station of an independent service set.

Preferably, the channel reservation request message and the channel reservation acknowledgement message are sent according to a frame structure, a modulation mode and a rate, which can be recognized by a traditional device.

According to another aspect of the present invention, a system for channel reservation is provided.

According to the present invention, the system for channel reservation comprises a sending station and a receiving station, wherein the sending station comprises: a first sending module, configured to send a channel reservation request message to a receiving station on a first number of fundamental channels, wherein the first number is an integer greater than or equal to 1, and each one of the fundamental channels is a minimum-bandwidth channel defined in a system in which the sending station and the receiving station locate; a first receiving module, configured to receive a channel reservation acknowledgement message from the receiving station on a second number of fundamental channels or on a primary channel, wherein the second number is an integer greater than or equal to 1; and a channel reservation module, configured to complete channel reservation with the receiving station; the receiving station comprises: a second receiving module, configured to receive the channel reservation request message from the sending station on the first number of fundamental channels or on a primary channel; and a second sending module, configured to send the channel reservation acknowledgement message to the sending station on the second number of fundamental channels.

Preferably, channel reservation request messages sent by the first sending module on each one of the first number of fundamental channels are identical; and channel reservation acknowledgement messages sent by the second sending module on each one of the second number of fundamental channels are identical.

Preferably, the first number of fundamental channels comprise a primary channel of the sending station; and the second number of fundamental channels comprise a primary channel of the receiving station.

Through the present invention, by interacting a channel reservation request message and a channel reservation acknowledgement message between the sending station and the receiving station, the problem that the used channels may be occupied by other sending stations during the process of using a plurality of channels for data transmission between the sending station and the receiving station can be solved, so that interference caused by other sending stations is avoided.

### Brief Description of the Drawings

Drawings, provided for further understanding of the present invention and forming a part of the specification, are used to explain the present invention together with embodiments of the present invention rather than to limit the present invention, wherein:

Fig. 1 is a diagram of a hidden station according to the related technologies;

Fig. 2 is a diagram of a method for channel reservation according to the related technologies;

Fig. 3 is a flow chart of a method for channel reservation according to an embodiment of the present invention; and

Fig. 4 is a structure block diagram of a system for channel reservation according to an embodiment of the present invention.

### Detailed Description of the Embodiments

It should be noted that, embodiments in the application and features in the embodiments can be combined if not conflicted. The present invention will be described in details below with reference to drawings and embodiments.

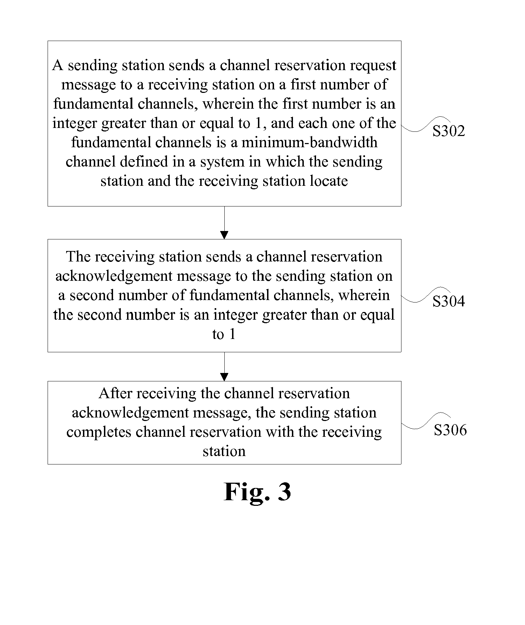

The present invention provides a method for channel reservation. Fig. 3 is a flow chart of a method for channel reservation according to an embodiment of the present invention. The method comprises the following steps S302 to S306.

Step S302: A sending station sends a channel reservation request message to a receiving station on a first number of fundamental channels, wherein the first number is an integer greater than or equal to 1, and each one of the fundamental channels is a minimum-bandwidth channel defined in a system in which the sending station and the receiving station locate.

Step S304: The receiving station sends a channel reservation acknowledgement message to the sending station on a second number of fundamental channels, wherein the second number is an integer greater than or equal to 1.

Step S306: The sending station receives the channel reservation acknowledgement message, and completes channel reservation with the receiving station.

In the related technologies, during the process of using a plurality of channels for data transmission between the sending station and the receiving station, the used channels may be occupied by other sending stations. In the embodiment of the present invention, the sending station and the receiving station interact with each other via a channel reservation request message and a channel reservation acknowledgement message, and a channel for data transmission and an occupation time of the channel can be reserved, so that other sending stations perform no data transmission on the channel and within the occupation time of the channel, so as to avoid interference caused by other sending stations.

It should be noted that, the first number and the second number can be equal, and also can be not equal, that is, the second number is smaller than or equal to the first number, or greater than the first number.

Preferably, the channel reservation request message and the channel reservation acknowledgement message are sent according to a frame structure, a modulation mode and a rate, which can be recognized by a traditional device. In this way, better compatible effect can be realized.

Preferably, channel reservation request messages sent by the sending station on each one of the first number of fundamental channels are identical; and channel reservation acknowledgement messages sent by the receiving station on each one of the second number of fundamental channels are identical.

The channel reservation request message sent by the sending station carries information about a first time duration, wherein the first time duration is a time duration required from the completion of sending the channel reservation request message to the time when the sending station completes data transmission and acknowledgment reception. The channel reservation acknowledgement message sent by the receiving station carries information about a second time duration, wherein the second time duration is a time duration required from the completion of sending the channel reservation acknowledgement message to the time when the sending station completes data transmission and acknowledgment reception.

Preferably, the first number of fundamental channels comprise a primary channel of the sending station; and the second number of fundamental channels comprise a primary channel of the receiving station.

The preferable embodiment specifically describes the first number of fundamental channels and the second number of fundamental channels, which can be one or more channels comprising the primary channel, and is at least the primary channel. It should be noted that, within a same BSS, the primary channel of the sending station and the primary channel of the receiving station are a same channel.

Preferably, before the sending station sends the channel reservation request message to the receiving station on the first number of fundamental channels, the sending station pre-negotiates with the receiving station about the number of the fundamental channels used for operation, wherein the number is smaller than or equal to the smaller one of the number of fundamental channels that can be supported by the sending station maximally and the number of fundamental channels that can be supported by the receiving station maximally. It should be noted that, in a practical system, during negotiation, the sending station and the receiving station can directly negotiate a specific bandwidth value to be used, and this bandwidth value is an integral multiple of the bandwidth of the fundamental channel.

Preferably, the first number is smaller than or equal to the pre-negotiated number of the fundamental channels used for operation, and the second number is smaller than or equal to the pre-negotiated number of the fundamental channels used for operation.

Preferably, the sending station comprises one of the following: an AP, a station of a basic service set, and a station of an independent service set; and the receiving station comprises one of the following: an AP, a station of a basic service set, and a station of an independent service set.

Preferably, the channel reservation request message is an RTS, and the channel reservation acknowledgement message is a CTS.

Through the above solution of the present invention, the sending station and the receiving station respectively send the channel reservation request message/ channel reservation acknowledgement message on a predetermined channel bandwidth, so that auditing stations on the channels to be used by the sending station and the receiving station can listen to the occupation time of the channels, and collision is effectively decreased.

The implementation process of the embodiment of the present invention will be described in details below with reference to examples.

The preferable embodiments of the present invention will be described below with reference to drawings. It should be noted that, preferable embodiments described herein are only used for describing and explaining the present invention, but not for limiting the present invention. Embodiments in the application and features in the embodiments may be combined if not conflicted. In the embodiments of the present invention, the bandwidth of the fundamental channel is 20MHz, a wide bandwidth in a unit of fundamental channels comprises: 40MHz, 80MHz, 120MHz and 160MHz, and other channel bandwidths in a unit of 20MHz.

### Preferable embodiment 1

In the preferable embodiment 1, the implementation of wireless channel detection via a channel reservation request message/ channel reservation acknowledgement message mainly comprises the following steps.

An AP and an STA notify to each other of a supported channel bandwidth capability, for example, the AP supports 160/80/40/20MHz, and the STA supports 80/40/20MHz. The AP and the STA negotiate that the bandwidth of the channel used for the current operation is 4 times of the bandwidth of the fundamental channel, i.e., 80MHz. The AP also needs to notify the STA of information comprising at least one of the following: information about a primary channel ID of the AP and information about a secondary channel ID of the AP.

Before sending data, the AP needs to send a channel reservation request message to the STA for channel reservation. The AP detects, by means of channel scanning, whether primary channels of other BSSs around the AP occupy the channel used by the AP itself for data transmission, and sends the channel reservation request message on the occupied channel of the AP and a primary channel of the AP. In the embodiment, by detecting four channels forming the 80MHz, the AP finds that the primary channels of other BSSs occupy the primary channel of the AP, then the AP sends the channel reservation request message to the STA on the primary channel of the AP, wherein the channel reservation request message carries information about a time duration, the time duration is equal to a time duration required from the completion of sending the channel reservation request message to the completion of data transmission and reception of an ACK frame from the STA.

The STA detects, by means of channel scanning, whether primary channels of other BSSs around the STA occupy the channel used by the STA itself for data transmission, and sends the channel reservation request message on the occupied channel of the STA and a primary channel of the STA. In the embodiment, by detection, the STA finds that the primary channels of other BSSs around the STA occupy the primary channel of the STA and a third channel of the STA. After receiving the channel reservation request message, the STA sends a same channel reservation acknowledgement message to the AP on the primary channel of the STA and the third channel of the STA as a response, wherein the channel reservation acknowledgement message also carries information about a time duration, and the time duration is equal to a time duration required from the completion of sending the channel reservation acknowledgement message to the time when the AP completes data transmission. In this way, it is ensured that all other STAs on all channels within the coverage range of the STA can listen to the duration information, so that no data transmission is performed on these channels within the time duration.

The AP and the STA are required to send the channel reservation request message and the channel reservation acknowledgement message according to a frame structure, a modulation mode and a rate, which can be recognized by traditional devices, so as to ensure that all terminals within the network can analyze the message correctly.

After receiving the channel reservation acknowledgement message, the AP can perform data transmission on the 80MHz channel bandwidth.

### Preferable embodiment 2

In the preferable embodiment 2, the implementation of wireless channel detection mainly comprises the following steps.

An AP and an STA notify to each other of a supported channel bandwidth capability, for example, the AP supports 160/80/40/20MHz, and the STA supports 80/40/20MHz. The AP and the STA negotiate that the bandwidth for the current operation is 80MHz. The AP also needs to notify the STA of information comprising at least one of the following: information about a primary channel ID of the AP and information about a secondary channel ID of the AP.

In the embodiment, the AP sends the channel reservation request message in the same method as in the preferable embodiment 1, to complete channel reservation with the STA. The AP detects, by means of channel scanning, that primary channels of other BSSs around the AP occupy a secondary channel of the AP, then the AP sends the channel reservation request message to the STA on the primary channel and the secondary channel, wherein the channel reservation request message carries information about a time duration, the time duration is equal to a time duration required from the completion of sending the channel reservation request message to the completion of data transmission and reception of an ACK frame from the STA. In this way, other STAs within the coverage range of the AP are ensured not to perform data transmission within the time duration.

The STA replies the channel reservation acknowledgement message in the same method as in the preferable embodiment 1. The STA detects, by means of channel scanning, that primary channels of other BSSs around the STA occupy a secondary channel and a third channel of the STA, then the STA sends a channel reservation acknowledgement message on the primary channel, the secondary channel and the third channel, wherein the channel reservation acknowledgement message carries information about one time duration, and the time duration is equal to a time duration required from the completion of sending the channel reservation acknowledgement message to the time when the AP completes data transmission. In this way, it is ensured that all other STAs on all channels within the coverage range of the STA can listen to the duration information, so that no data transmission is performed on these channels within the time duration.

The AP and the STA are required to send the channel reservation request message and the channel reservation acknowledgement message according to a frame structure, a modulation mode and a rate, which can be recognized by traditional devices, so as to ensure that all terminals within the network can analyze the message correctly.

After receiving the channel reservation acknowledgement message, the AP can perform data transmission on the 80MHz channel bandwidth.

### Preferable embodiment 3

In the preferable embodiment 3, the implementation of wireless channel detection mainly comprises the following steps.

An AP and an STA notify to each other of a supported channel bandwidth capability, for example, the AP supports 160/80/40/20MHz, and the STA supports 80/40/20MHz. The AP and the STA negotiate that the bandwidth for the current operation is 80MHz. The AP also needs to notify the STA of information comprising at least one of the following: information about a primary channel ID of the AP and information about a secondary channel ID of the AP.

Before sending data, the AP sends a channel reservation request message to the STA for channel reservation. The AP detects, by means of channel scanning, whether primary channels of other BSSs around the AP occupy the channel used by the AP itself for data transmission, and sends the channel reservation request message on the primary channel, the occupied channel and the other 20MHz channel within one 40MHz in which the occupied channel locates. If only the primary channel within the 40MHz in which the primary channel and the secondary channel locate is occupied, the AP only needs to send the channel reservation request message on the primary channel. In the embodiment, the AP detects, by means of channel scanning, that the primary channels of other BSSs around the AP only occupy the primary channel of the AP, the AP sends the channel reservation request message to the STA on the primary channel, wherein the channel reservation request message carries information about a time duration, the time duration is equal to a time duration required from the completion of sending the channel reservation request message to the completion of data transmission and reception of the ACK frame from the STA. In this way, other STAs within the coverage range of the AP are ensured not to perform data transmission within the time duration.

The STA detects, by means of channel scanning, that the primary channels of other BSSs around the STA occupy the third channel and the primary channel of the STA, similar to the rules used by the AP to send the channel reservation request message, the STA needs to send a same channel reservation acknowledgement message on the primary channel, the third channel and a fourth channel within a same 40MHz in which the third channel locates as a response, wherein the channel reservation acknowledgement message carries information about one time duration, and the time duration is equal to a time duration required from the completion of sending the channel reservation acknowledgement message to the time when the AP completes data transmission. In this way, it is ensured that all other STAs on all channels within the coverage range of the STA can listen to the duration information, so that the other STAs will not perform data transmission on these channels within the time duration.

The AP and the STA are required to send the channel reservation request message and the channel reservation acknowledgement message according to a frame structure, a modulation mode and a rate, which can be recognized by traditional devices, so as to ensure that all terminals within the network can analyze the message correctly.

After receiving the channel reservation acknowledgement message, the AP can perform data transmission on the 80MHz channel bandwidth.

### Preferable embodiment 4

In the preferable embodiment 4, the implementation of wireless channel detection mainly comprises the following steps.

An AP and an STA notify to each other of a supported channel bandwidth capability, for example, the AP supports 160/80/40/20MHz, and the STA supports 80/40/20MHz. The AP and the STA negotiate that the bandwidth for the current operation is 80MHz. The AP also needs to notify the STA of information comprising at least one of the following: information about a primary channel ID of the AP and information about a secondary channel ID of the AP.

Before sending data, the AP sends a channel reservation request message to the STA for channel reservation. In the embodiment, the AP sends the channel reservation request message in the same method as in the preferable embodiment 3. The AP detects, by means of channel scanning, that the primary channels of other BSSs around the AP occupy the secondary channel of the AP, then the AP sends the channel reservation request message to the STA on the primary channel and the secondary channel, wherein the channel reservation request message carries information about a time duration, the time duration is equal to a time duration required from the completion of sending the channel reservation request message to the completion of data transmission and reception of an ACK frame from the STA. In this way, other STAs within the coverage range of the AP are ensured not to perform data transmission within the time duration.

The STA sends the channel reservation acknowledgement message in the same method as in the preferable embodiment 3. The STA detects, by means of channel scanning, that the primary channels of other BSSs around the STA occupy the third channel of the STA, then the STA sends a channel reservation acknowledgement message on the primary channel, the third channel and a fourth channel adjacent to the third channel as a response, wherein the channel reservation acknowledgement message carries information about one time duration, and the time duration is equal to a time duration required from the completion of sending the channel reservation acknowledgement message to the time when the AP completes data transmission. In this way, it is ensured that all other STAs on all channels within the coverage range of the STA can listen to the duration information, so that other STAs will not perform data transmission on these channels within the time duration.

The AP and the STA are required to send the channel reservation request message and the channel reservation acknowledgement message according to a frame structure, a modulation mode and a rate, which can be recognized by traditional devices, so as to ensure that all terminals within the network can analyze the message correctly.

After receiving the channel reservation acknowledgement message, the AP can perform data transmission on the 80MHz channel bandwidth.

### Preferable embodiment 5

In the preferable embodiment 5, the implementation of wireless channel detection mainly comprises the following steps.

An AP and an STA notify to each other of a supported channel bandwidth capability, for example, the AP supports 160/80/40/20MHz, and the STA supports 80/40/20MHz. The AP and the STA negotiate that the bandwidth for the current operation is 80MHz. The AP also needs to notify the STA of information comprising at least one of the following: information about a primary channel ID of the AP and information about a secondary channel ID of the AP.

The AP sends a channel reservation request message in the same method as in the preferable embodiment 3. Before sending data, the AP detects, by means of channel scanning, that primary channels of other BSSs around the AP occupy a secondary channel and a fourth channel of the AP, then the AP needs to send a same channel reservation request message to the STA on all channels, wherein the channel reservation request message carries information about a time duration, the time duration is equal to a time duration required from the completion of sending the channel reservation request message to the completion of data transmission and reception of an ACK frame from the STA. In this way, other STAs within the coverage range of the AP are ensured not to perform data transmission within the time duration.

The STA sends a channel reservation acknowledgement message in the same method as in the preferable embodiment 3. The STA detects, by means of channel scanning, that primary channels of other BSSs around the STA occupy a secondary channel and a third channel of the STA, so after receiving the channel reservation request message, the STA needs to send a same channel reservation acknowledgement message to the AP on all channels as a response, wherein the channel reservation acknowledgement message carries information about one time duration, and the time duration is equal to a time duration required from the completion of sending the channel reservation acknowledgement message to the time when the AP completes data transmission.

After receiving the channel reservation acknowledgement message, the AP can perform data transmission with the STA.

### Preferable embodiment 6

In the preferable embodiment 6, the implementation of wireless channel detection mainly comprises the following steps.

An AP and an STA notify to each other of a supported channel bandwidth capability, for example, the AP supports 160/80/40/20MHz, and the STA supports 80/40/20MHz. The AP and the STA negotiate that the bandwidth for the current operation is 80MHz. The AP also needs to notify the STA of information comprising at least one of the following: information about a primary channel ID of the AP and information about a secondary channel ID of the AP.

In the embodiment, the AP sends a channel reservation request message to perform channel reservation with the STA. The AP detects, by means of channel scanning, that current idle channels of the AP are a primary channel, a secondary channel and a secondary 40MHz channel, then the AP sends a channel reservation request message to the STA on the primary channel, the secondary channel and the secondary 40MHz channel, that is, sends a same channel reservation request message on each 20MHz of the 80MHz bandwidth, wherein the channel reservation request message carries information about a time duration, the time duration is equal to a time duration required from the completion of sending the channel reservation request message to the completion of data transmission and reception of an ACK frame from the STA. In this way, other STAs within the coverage range of the AP are ensured not to perform data transmission within the time duration and on the channels on which the channel reservation request message is sent.

After receiving the channel reservation request message, in a case that a current NAV of the STA is not zero, the STA detects, by means of channel scanning, that one secondary channel of the STA adjacent to the primary channel is idle, then the STA sends 40MHz of channel reservation acknowledgement message on the primary channel and the secondary channel, wherein each 20MHz of channel reservation acknowledgement message is identical and carries information about a time duration, and the time duration is equal to a time duration required from the completion of sending the channel reservation acknowledgement message to the time when the AP completes data transmission. In this way, it is ensured that all other STAs on all the channels of the STA can listen to the duration information, so that no data transmission is performed on these channels within the time duration.

The AP and the STA are required to send the channel reservation request message and the channel reservation acknowledgement message according to a frame structure, a modulation mode and a rate, which can be recognized by traditional devices, so as to ensure that all terminals within the network can analyze the message correctly.

After receiving the channel reservation acknowledgement message, the AP performs data transmission on the 40MHz channel bandwidth, or performs data transmission on the primary 20MHz channel bandwidth.

It should be noted that, steps shown in the flow charts in the drawings can be executed in a computer system, such as a group of computer executable instructions; furthermore, although a logic sequence is shown in the flow charts, in some cases, the shown or described steps can be executed in an order different from that shown herein.

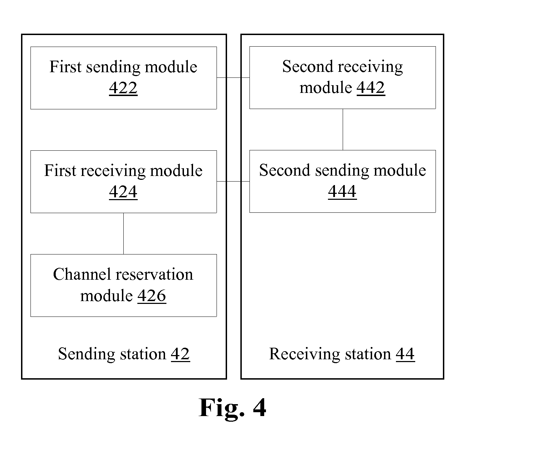

An embodiment of the present invention provides a system for channel reservation, and the system for channel reservation can be used for implementing the method for channel reservation. Fig. 4 is a structure block diagram of a system for channel reservation according to an embodiment of the present invention, comprising a sending station 42 and a receiving station 44. The sending station 42 comprises: a first sending module 422, a first receiving module 424 and a channel reservation module 426. The receiving station 44 comprises: a second receiving module 442 and a second sending module 444. The structure will be described in details below.

The first sending module 422 is configured to send a channel reservation request message to a receiving station on a first number of fundamental channels, wherein the first number is an integer greater than or equal to 1, and each one of the fundamental channels is a minimum-bandwidth channel defined in a system in which the sending station and the receiving station locate. The second receiving module 442 is coupled with the first sending module 422 and is configured to receive the channel reservation request message from the first sending module 422 on the first number of fundamental channels or on a primary channel. The second sending module 444 is configured to send a channel reservation acknowledgement message to the sending station on a second number of fundamental channels, wherein the second number is an integer greater than or equal to 1. The first receiving module 424 is coupled with the second sending module 444 and is configured to receive the channel reservation acknowledgement message from the second sending module 444 on the second number of fundamental channels or on a primary channel. The channel reservation module 426 is coupled with the first receiving module 424 and is configured to complete channel reservation with the receiving station according to the channel reservation acknowledgement message received by the first receiving module 424.

In the related technologies, during the process of using a plurality of channels for data transmission between the sending station and the receiving station, the used channels may be occupied by other sending stations. In the embodiment of the present invention, the sending station and the receiving station interact with each other via the channel reservation request message and the channel reservation acknowledgement message, and a channel for data transmission and an occupation time of the channel can be reserved, so that other sending stations perform no data transmission on the channel and within the occupation time of the channel, thereby avoiding interference caused by other sending stations.

Preferably, channel reservation request messages sent by the first sending module 422 on each one of the first number of fundamental channels are identical; and channel reservation acknowledgement messages sent by the second sending module 444 on each one of the second number of fundamental channels are identical.

The channel reservation request message sent by the sending station carries information about a first time duration, wherein the first time duration is a time duration required from the completion of sending the channel reservation request message to the time when the sending station completes data transmission and acknowledgment reception. The channel reservation acknowledgement message sent by the receiving station carries information about a second time duration, wherein the second time duration is a time duration required from the completion of sending the channel reservation acknowledgement message to the time when the sending station completes data transmission and acknowledgment reception.

Preferably, the first number of fundamental channels comprise the primary channel of the sending station; and the second number of fundamental channels comprise the primary channel of the receiving station.

The preferable embodiment specifically describes the first number of fundamental channels and the second number of fundamental channels, which can be one or more channels comprising the primary channel, and is at least the primary channel. It should be noted that, within a same BSS, the primary channel of the sending station and the primary channel of the receiving station can be a same channel.

Preferably, the channel reservation request message is an RTS, and the channel reservation acknowledgement message is a CTS.

It should be noted that, the system for channel reservation described in the apparatus embodiments is corresponding to the above method embodiments, and the specific implementation processes have been described in details in the method embodiments and will not be described again herein.

In conclusion, according to the embodiments of the present invention, the method and the system for channel reservation are provided. By interacting the channel reservation request message and the channel reservation acknowledgement message between the sending station and the receiving station, the problem that the used channels may be occupied by other sending stations during the process of using a plurality of channels for data transmission between the sending station and the receiving station can be solved, so that interference caused by other sending stations is avoided.

Obviously, those skilled in the art shall understand that the above-mentioned modules and steps of the present invention can be realized by using general purpose calculating device, can be integrated in one calculating device or distributed on a network which consists of a plurality of calculating devices. Alternatively, the modules and the steps of the present invention can be realized by using the executable program code of the calculating device. Consequently, they can be stored in the storing device and executed by the calculating device, or they are made into integrated circuit module respectively, or a plurality of modules or steps thereof are made into one integrated circuit module. In this way, the present invention is not restricted to any particular hardware and software combination.

The descriptions above are only the preferable embodiment of the present invention, which are not used to restrict the present invention. For those skilled in the art, the present invention may have various changes and variations. Any amendments, equivalent substitutions, improvements, etc. within the principle of the present invention are all included in the scope of the protection of the present invention.

## Claims

1. A method for channel reservation, **characterized by** comprising:
a sending station sending a channel reservation request message to a receiving station on a first number of fundamental channels, wherein the first number is an integer greater than or equal to 1, and each one of the fundamental channels is a minimum-bandwidth channel defined in a system in which the sending station and the receiving station locate;
the receiving station sending a channel reservation acknowledgement message to the sending station on a second number of fundamental channels, wherein the second number is an integer greater than or equal to 1; and
the sending station receiving the channel reservation acknowledgement message, and completing channel reservation with the receiving station.

2. The method according to claim 1, **characterized in that** channel reservation request messages sent by the sending station on each one of the first number of fundamental channels are identical; and channel reservation acknowledgement messages sent by the receiving station on each one of the second number of fundamental channels are identical.

3. The method according to claim 1, **characterized in that** the first number of fundamental channels comprise a primary channel of the sending station; and the second number of fundamental channels comprise a primary channel of the receiving station.

4. The method according to any one of claims 1 to 3, **characterized in that** the second number is smaller than or equal to the first number.

5. The method according to any one of claims 1 to 3, **characterized in that** before the sending station sends the channel reservation request message to the receiving station on the first number of fundamental channels, the method further comprises:
the sending station pre-negotiating with the receiving station about the number of fundamental channels used for operation, wherein the number is smaller than or equal to a smaller one of the number of fundamental channels that can be supported by the sending station maximally and the number of fundamental channels that can be supported by the receiving station maximally.

6. The method according to claim 5, **characterized in that** the first number is smaller than or equal to the pre-negotiated number of the fundamental channels used for data transmission, and the second number is smaller than or equal to the pre-negotiated number of the fundamental channels used for data transmission.

7. The method according to any one of claims 1 to 3, **characterized in that** the sending station comprises one of the following: an access point, a station of a basic service set, and a station of an independent service set; and the receiving station comprises one of the following: an access point, a station of a basic service set, and a station of an independent service set.

8. The method according to any one of claims 1 to 3, **characterized in that** the channel reservation request message and the channel reservation acknowledgement message are sent according to a frame structure, a modulation mode and a rate, which can be recognized by a traditional device.

9. A system for channel reservation, **characterized by** comprising a sending station and a receiving station, wherein
the sending station comprises:
a first sending module, configured to send a channel reservation request message to a receiving station on a first number of fundamental channels, wherein the first number is an integer greater than or equal to 1, and each one of the fundamental channels is a minimum-bandwidth channel defined in a system in which the sending station and the receiving station locate;
a first receiving module, configured to receive a channel reservation acknowledgement message from the receiving station on a second number of fundamental channels or on a primary channel, wherein the second number is an integer greater than or equal to 1; and
a channel reservation module, configured to complete channel reservation with the receiving station;
the receiving station comprises:
a second receiving module, configured to receive the channel reservation request message from the sending station on the first number of fundamental channels or on a primary channel; and
a second sending module, configured to send the channel reservation acknowledgement message to the sending station on the second number of fundamental channels.

10. The system according to claim 9, **characterized in that** channel reservation request messages sent by the first sending module on each one of the first number of fundamental channels are identical; and channel reservation acknowledgement messages sent by the second sending module on each one of the second number of fundamental channels are identical.

11. The system according to claim 9, **characterized in that** the first number of fundamental channels comprise a primary channel of the sending station; and the second number of fundamental channels comprise a primary channel of the receiving station.
